# EUROPEAN PATENT SPECIFICATION

(11) **EP 3 268 240 B1**
(45) Date of publication and mention of the grant of the patent: **26.02.2020**
(21) Application number: 16708688.3
(22) Date of filing: 09.03.2016
(51) Int. Cl.: B60S 1/08, B60H 1/00, G01N 21/552, H05B 3/86

(54) **WINDSHIELD MONITORING SYSTEM**
WINDSCHUTZSCHEIBENÜBERWACHUNGSSYSTEM
SYSTÈME DE SURVEILLANCE DE PARE-BRISE

(30) Priority: 09.03.2015 GB 201503981; 09.03.2015 GB 201503984
(43) Date of publication of application: 17.01.2018
(73) Proprietor: Jaguar Land Rover Limited, Coventry, Warwickshire CV3 4LF (GB)
(72) Inventor: BELOE, Neil, Coventry Warwickshire CV3 4LF (GB); PARSONS, Jonathan, Coventry Warwickshire CV3 4LF (GB)
(74) Representative: Holmes, Matthew William
(86) International application number: PCT/EP2016/054995
(87) International publication number: WO 2016/142412

(56) References cited:
- EP-A2- 1 925 476
- DE-A1- 10 339 696
- US-A1- 2005 168 732

## Description

### TECHNICAL FIELD

The present disclosure relates to a windshield monitoring system, particularly, but not exclusively, for a vehicle. Aspects of the invention relate to a windshield monitoring system, a windshield clearing system, a vehicle including the same, a method of monitoring a windshield, and a method of clearing a windshield.

### BACKGROUND

A vehicle such as a car or the like includes a frame supporting several windshields. A windshield is a term of art covering a front windscreen, or a rear windscreen, or a side window, of which there are several. A windshield may comprise a laminate construction or it may be a singular piece of glass. A windshield serves several functions including segregating interior and exterior environments of the vehicle whilst providing visible communication between the two.

Under ideal conditions, interior and exterior surfaces of the windshield are characterised by a glass to air interface. In practice, various sources of contamination can build up on either surface affecting the visibility for the vehicle occupants.

Windshields are prone to having their surfaces contaminated which can result in a degradation of visibility. Water based contaminants are most frequent and result from differences in humidity and temperature between interior and exterior environments of the vehicle. For instance, on a very cold day, moisture from occupants' respiration and/or wet clothing can condense on an interior surface of a windshield. Such condensation can be problematic from a visibility perspective when condensation covers large areas of a windshield. Another example of problematic windshield contamination is ice on an external surface of the windshield on a particularly cold day.

Typically, vehicles are provided with heating provisions which can be operated to clear such contamination. One such heating provision includes air blowers which can be manually oriented by a vehicle occupant towards the interior surface of the windshield.

Another heating provision includes a series of electroconductive parallel wires which heat up due to electrical resistance when an electrical current is passed across them, and which are embedded into the laminated glass. The wires heat the glass by an energy transfer from electrical energy to thermal energy. Such a system can be operated manually by an occupant pressing a push button on an instrument panel. Such manually operated heating elements are inherently inefficient as they require an occupant to monitor the windshield themselves, to actively detect the contamination, and to activate the heating elements accordingly. Typically, a driver would not activate the heating elements unless the source of contamination was affecting their visibility. Hence at the time of detection of any contamination, the area of contamination is likely to be large resulting in excessive power being required to clear the contamination. In addition, the user will inevitably always over compensate and leave the heating element on for much longer than is required. Accordingly, energy operating the heating element will be wasted unnecessarily.

Various attempts have been made to provide automatic contamination detection systems.

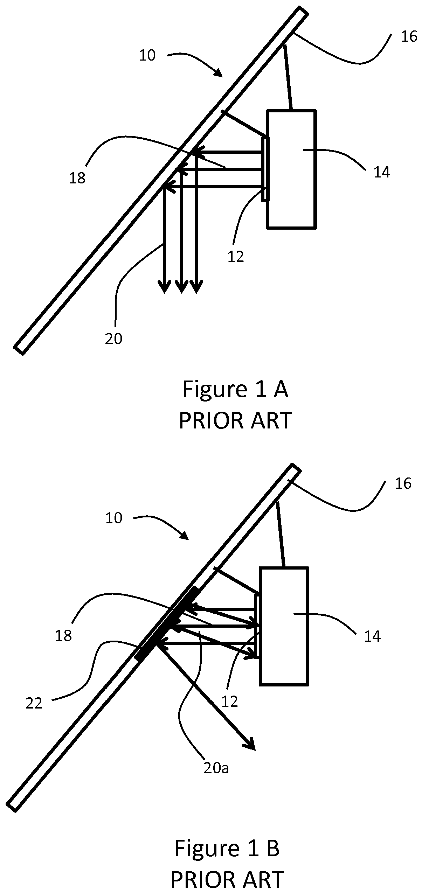

With reference to Figures 1A and 1B, one known system includes a windshield 10 having a combined emitter/detector 12 mounted on a reverse (non-reflective) side of a rear-view mirror 14. The emitter shines infrared light 18 onto an interior surface 16 of the windshield 10. Since the windshield 10 is oriented at an acute angle of inclination relative to the rear-view mirror, any reflected light 20 from the emitter reflects away from the detector 12. However, the presence of contamination 22 in the area of the windshield 10 where the light 18 is shone is scattered on reflection. The scattered light 20a is likely to impinge on the detector 12. Any detected light is determined to be attributable to the presence of surface contamination 22.

Such a system is not ideal since the scattered light 20a may not impinge on the detector 12 and in addition only contamination in the area of the windshield 10 where light is shone can be detected. Accordingly, such attempts to automatically heat the windshield to clear the contamination are not energy efficient since it is likely that large areas of contamination can develop before being detected. In addition, the entire windshield may be heated if a small amount of condensation develops in the region of the sensor.

Another known contamination detection system uses an infrared light detector within the vehicle interior in an attempt to detect any rain water on the exterior surface of the windshield by monitoring for reflection of the infrared light resulting from the light passing through the rain drops. Such systems are not very popular. Primarily, this is due to the fact that it is desirable to include an infrared reflective (IRR) layer as part of the laminated windshield to reflect away heat energy from the vehicle cabin. IRR glass has an internal conductive metallic layer which is reflective to infrared light. Accordingly, the infrared light for the rain sensor cannot pass the wind shield to detect the presence of rain water. In order to make the system usable, a window has to be cut in to the IRR layer by laser cutting. The rain detection system is thus limited to the size of the window cut in to the glass. This is a common trait with rain detection systems, which are generally limited to detecting rain in a small area of the windshield. Cutting the window in to the IRR layer removes any of the benefits associated with using IRR glass, though in practice the affected area is relatively small. In addition, such a laser cutting process is expensive.

A further known windshield contaminant detection system uses a dew point detection system for detecting dew formation on an interior surface of a windshield. Such dew point detection systems work by estimating dew formation by calculation based on humidity and temperature. Since these dew point detection systems are based on calculation rather than being detected directly, they are inherently inaccurate. As a result, any windshield clearing mechanisms, such as heating mechanisms, used to clear the windshield based on the detection of dew in this way may be activated in an untimely manner. Untimely activation of the clearing mechanisms wastes energy since the windshield may either be heated when no dew is present or be activated later than required allowing a relatively large area of dew to form, which would be harder to clear.

DE 10339696 describes a system for detecting rain drops on a vehicle windshield. The system includes a light source that emits light into the outer edge of the windshield to be propagated along the windshield, and a camera that compares a reference image of the windshield to a current image of the windshield to detect the presence of rain drops. This document is considered to be the prior art closest to the subject-matter of the independent claims.

It is an aim of the present invention to further improve on the prior art.

### SUMMARY OF THE INVENTION

According to an aspect of the present invention there is provided a windshield monitoring system comprising a windshield for a vehicle. The system comprises a plurality of light emitters forming an array. Each emitter is arranged to direct a beam of light into an edge of the windshield at an angle of incidence arranged to subject the beam of light to total internal reflection at a windshield to air interface to propagate the beam of light across the windshield to an opposing edge thereof. The angle of incidence is arranged to refract the light beam away from the windshield at a windshield to contaminant interface. The system comprises a light detector arranged to detect that light from the beam of light has been refracted away from the windshield. The emitters are separated substantially across a length of the windshield. Each emitter comprises means to pulsate the light beam according to a predefined pattern.

Contamination is defined as any impurities at a windshield surface resulting in an interface which could alter visibility through the windshield. Using total internal reflection and refraction of light beams provides for effective detection of any such contamination. Using an array of light emitters separated substantially along a length of the windshield provides a large area of coverage over the windshield. Accordingly, there is a higher likelihood of detecting the contamination early.

The light detector may be arranged to detect the presence of any refracted light directly. An alternative is to monitor the reflected light and determine the presence of refracted light by an intensity drop in the reflected light. Light measured directly is either present or not present. Detecting the presence of reflected light is thus more reliable.

The windshield may be a front windscreen, or a rear windscreen, or a side window. Front and rear windscreens are most likely to benefit from such a monitoring system since any contamination on those windscreens would more greatly affect a driver's vision or distract their attention. Side windows, especially front side windows can also affect a driver's vision.

The contamination may be selected from the list of moisture, ice, and liquid water.

The or each light emitter may comprise a Light Emitting Diode (LED). An LED is relatively cheap and simple compared to other light emitters and emit light over a narrow bandwidth which may be advantageous for detection purposes.

Each light emitter comprises a pulsar to pulsate, strobe, or shutter the light beam according to a predefined pattern. Pulsating the light beam provides for a level of noise filtering since any light detected which isn't pulsating according to the predefined pattern would not be attributable to the light emitter.

Each light beam may be pulsated at a unique predefined pattern or may be phase shifted relative to the other light pulse patterns. Each light beam being unique in these ways would allow the emitter and/or the location within the windscreen of the light beam it emits to be identified.

The array may substantially span along a side edge of the windshield. A side edge as opposed to a top or bottom edge would result in fewer light emitters being required to provide equivalent windshield coverage due to the aspect ratio of a windshield.

The light source may comprise two arrays of light emitters, the arrays being mutually orthogonal. Two mutually orthogonal arrays provides for a 2 dimensional co-ordination system which is particularly advantageous when using detectors which have difficulty in distinguishing direction of the source of the light. The 2 dimensional array thus allows for improved fidelity of locating the contamination.

The light detector may comprise a camera arranged to monitor the windshield. The camera may be configured to be sensitive only to the light wavelength, or band of wavelengths produced by the light emitters. Cameras are reliable and easy to install. In addition, location of the contamination can be detected to a relatively high degree of accuracy by associating the location of refracted light with a particular pixel of the camera.

The camera may be arranged to monitor the interior face of the windshield. Any refracted light resulting from interior contamination may thus be detected directly.

The light detector may comprise a photodiode. Photodiodes are cheap and reliable and would be particularly advantageous when used with the 2 dimensional array of light emitters.

The system may comprise an association module arranged to determine a coordinate position of the contamination by associating the light with one or more emitters from each array.

The system may comprise a noise filter to distinguish light emitted from the light emitter from other light. The noise filter thus reduces the risk of false light detections.

The noise filter may comprise a lock-in amplifier. A lock-in amplifier is reliable and easy to integrate.

The angle of incidence of the light beam may be between about 43 ° and about 65°. The critical angle of a glass to air interface may be about 43° and the critical angle of a glass to water interface may be about 65°. The difference in critical angle is due to the difference in refractive index between air and water. Therefore, the system would detect most water based contamination over this range of incidence angles.

According to a further aspect of the present invention there is provided a windshield clearing system comprising; the aforementioned windshield monitoring system; a windshield clearing element on the windshield; and a control module arranged to control the windshield clearing element to clear the windshield in response to the detection of refracted light.

The windshield clearing element may comprise a heating mechanism. The heating mechanism may comprise a plurality of heating elements, wherein the control module may be arranged to heat a heating element at a location corresponding to the detected contamination. Each heating element may comprise a resistance heating element. A resistance heating element converts electrical energy to heat energy and are relatively efficient compared to other heating types.

The resistance heating element may comprise a metallic layer. A metallic layer is easy to provide on a windshield for instance by deposition.

The system may comprise a termination module to terminate heating of the heating element in response to the windshield monitoring system ceasing to detect refracted light or after a predetermined time period.

Terminating heating in response to no refracted light being detected provides for an increase of efficiency in terms of power required to power the system.

According to a further aspect of the present invention there is provided a vehicle comprising the aforementioned windshield clearing system.

According to a further aspect of the present invention there is provided a method of monitoring a windshield. The method comprises emitting a plurality of light beams into an edge of the windshield at an incidence angle arranged to subject the light beams to total internal reflection at a windshield to air interface to propagate across the windshield. The angle of incidence is arranged to refract the light beam away from the windshield at a windshield to contaminant interface. The plurality of light beams are separated so as to substantially span a length of the windshield. The method comprises detecting the presence of light refracted away from the windshield. The method comprises pulsating each light beam according to a predefined pattern.

The method may comprise strobing of the or each light beam according to a pre-defined pattern.

The method may comprise pulsing, strobing or shuttering each light beam according to a unique pattern.

The method may comprise emitting the plurality of light beams substantially along adjacent mutually orthogonal edges of the windshield.

The method may comprise filtering out noise detected by the light detector.

The angle of incidence of the light beam may be between about 43° and about 65°.

The method may comprise associating the refracted light with one of the light emitters.

According to a further aspect of the present invention there is provided a method of clearing a windshield comprising; detecting surface contamination using the aforementioned method of monitoring a windshield; and heating the windshield in response to detecting any contamination.

The method may comprise dividing the windshield into a plurality of zones and heating the zone corresponding to the location of detected contamination.

The method may comprise terminating the heating of the area in response to ceasing to detect refracted light or after a predetermined time period.

According to an aspect of the invention there is provided a windshield monitoring system. The system may comprise a laminated windshield having an infrared reflective (IRR) layer. The system may comprise an infrared light source arranged to direct a beam of light into the windshield at an incidence angle arranged to subject the beam of light to total internal reflection at a windshield to air interface to propagate the beam of light across the windshield towards an opposing edge thereof. The angle of incidence may be arranged to refract light away from the windshield at a windshield to contaminant interface, wherein the infrared light is arranged to reflect off the infrared reflective layer. The system may comprise an infrared light detector arranged to detect that light has been refracted away from the windshield.

The windshield monitoring system according to embodiments may allow for contamination to be detected before it obscures a relatively large area of the windshield which saves energy in removing the contamination by heating the glass. It is counterintuitive to use infrared light for detecting contamination of a windshield surface since the windshield has the infrared reflective layer not allowing the infrared light to pass. However, in this case, the infrared reflective layer is used to benefit the propagation of the infrared light beam across the windshield.

The light detector may be arranged to monitor intensity of the internally reflected light to detect refracted light by a drop in light intensity.

The light source may be arranged to direct the beam of light on an interior side of the infrared reflective layer, and/or the light source may be arranged to direct the beam of light on an exterior side of the infrared reflective layer.

A beam of light directed on the interior side of the infrared reflective layer means the contamination on the interior surface of the wind shield can be detected. In a similar way, a light beam directed on the exterior side of the infrared reflective layer will detect surface contamination on the exterior side of the wind shield.

The light detector may comprise a photodiode.

The light source may comprise a plurality of light emitters forming an array substantially spanning along an edge of the windshield and each emitter may be arranged to direct a beam of infrared light across the windshield towards an opposing edge thereof.

The array of light emitters substantially spanning along an edge of the windshield provides for a wide area of coverage for the detection system.

The windshield monitoring system may comprise a locating module arranged to locate the contamination based on which light detector has detected the contamination.

The locating module provides for more accurate contamination detection which in turn allows for a more energy efficient system since the area affected by the contamination can be targeted for clearing before the contamination spreads.

The light source may comprise two mutually orthogonal arrays of emitters wherein each array may substantially span along adjacent edges of the windshield and may be arranged to direct light to a respective opposing edge thereof.

The two mutually orthogonal arrays provides for two dimensional positioning of any detected contamination such that the contamination can be assigned a coordinate on the windshield.

The light detector may comprise a plurality of light detectors each being associated with a different light emitter.

The system may comprise a noise filter to distinguish light emitted from the light source from other detected light.

Reducing the detection of other detected light reduces the risk of erroneous readings when detecting the presence of refracted light since light can be detected from sources other than the emitters of the windshield monitoring system.

The noise filter may comprise a lock-in amplifier.

A lock-in amplifier is a reliable component which lends itself particularly well to this application.

The system may comprise a pulsar arranged to pulsate the light according to a predefined pattern.

Pulsating the light makes it easier to detect the source of the detected light since light coming from other sources would not be pulsated in the same way.

Each light emitter may be pulsed, strobed, or shuttered according to a unique pattern or may be phase shifted relative to the other light emitters.

A unique pattern per light emitter or phase shifted light relative to the other emitters is easier to identify the source of the light which can further aid in locating the contamination on the wind shield.

The windshield may be a front windscreen, a rear windscreen, or a side window.

The front and rear windscreens would benefit particularly well from this windshield monitoring system since it is these windshields which have the biggest impact on driver visibility. Side windows, particularly front side windows also have an effect on driver visibility.

The contamination may be selected from the list of moisture, ice, liquid water.

These contaminants are particularly suited to this application since they are most easily treated with other ancillary systems of the vehicle such as heaters and/or air blowers. Treatment is more difficult for other contaminants, for example, dirt.

The angle of incidence of the light beam may be between about 43° and about 65°.

The critical angle for a glass to air interface is about 43° and the critical angle for a glass to water interface is about 65° due to the difference in refractive index of air and water. Accordingly, an angle of incidence of the light in this range would be reliable enough to refract away light only at a glass to water interface but not at a glass to air interface.

According to a further aspect of the present invention there is provided a windshield clearing system comprising the aforementioned windshield monitoring system; a windshield clearing element; and a control module arranged to control the windshield clearing element to clear the contamination in response to detecting refracted light.

The windshield clearing element may comprise a heating mechanism. The windshield clearing element may comprise a windshield wiper system.

The heating mechanism may be divided into a plurality of heating elements and the control module may be arranged to control the heating elements to heat the windshield at a location corresponding to the detected contamination.

Dividing the heating element into a plurality of heating elements, or zones, and only heating the heating element corresponding to the location of detected contamination reduces the energy consumption by the vehicle since no energy is wasted clearing uncontaminated areas.

The heating element may comprise a resistance heating element.

The resistance heating element may comprise a metallic layer.

A metallic layer is easy to deposit on to a windshield at relatively low cost.

The windshield clearing system may comprise a blower control unit for electrical communication with an air blower arranged to selectively direct air towards the windshield.

Alternatively, the windshield clearing system may comprise a wiper system.

The windshield wiper system may be arranged to cycle selectively over an area of the windshield where exterior contamination has been detected.

The windshield clearing system may comprise a termination module to stop operation of the clearing system in response to contamination no longer being detected. Terminating clearing leads to further energy efficiencies since attempting to clear an already clear windshield is just wasted energy. This is particularly important for electric vehicles and hybrid electric vehicles.

Alternatively or in addition, the termination module may be arranged to stop operation of the clearing system after a predetermined time period. This is important for false triggers resulting from, for instance, windshield cracks since the clearing system would not be able to 'clear' the crack and so allowing the system to continue attempting to clear the crack would waste energy.

The control module may be arranged to emit a warning or indication in response to stopping operation of the clearing system after more than a predefined number of times. The control module may be arranged to emit a warning or indication after a predefined number of times of stopping operation of the clearing system, in the case of stopping after a predetermined time period. The indication can be used off-line, for instance during manufacture, or on the vehicle as a dashboard indication or a signal available during a maintenance inspection, to indicate that the windshield requires inspection since such reoccurrences may be due to the presence of windshield cracks, which cracks are not clearable by the clearing system.

According to a further aspect of the present invention there is provided a vehicle comprising the aforementioned windshield clearing system.

According to a further aspect of the present invention there is provided a method of detecting surface contamination on a windshield having an infrared reflective (IRR) layer. The method may comprise emitting an infrared light beam into an edge of the windshield at an angle of incidence arranged to subject the light beam to total internal reflection at a windshield to air interface to propagate the light beam towards an opposing edge of the windshield. The angle of incidence may be arranged to refract the beam of light away from the windshield at a windshield to contaminant interface. The method may comprise reflecting the light off the IRR layer. The method may comprise detecting surface contamination by monitoring light from the beam of light being refracted away from the windshield.

The method may comprise monitoring light reflected internally within the windshield. The method may comprise determining the presence of surface contamination by a drop in light intensity due to light being refracted away from the windshield.

The method may comprise filtering out noise from other detected light not associated with the emitted light.

The method may comprise emitting a plurality of light beams substantially spanning along an edge of the windshield. The method may comprise detecting any refracted light from each of the light beams. The method may comprise associating the location of the refracted light with one of the light beams to determine the location of the contamination.

The method may comprise;
emitting the plurality of light beams as two arrays, each array substantially spanning along adjacent edges of the windshield. These adjacent edges may be arranged orthogonally to one another.

The method may comprise emitting an infrared light beam across an interior side of the IRR layer of the windshield. The method may comprise emitting an infrared light beam across an exterior side of the IRR layer of the windshield.

The angle of incidence of the light beam may be between about 43° and about 65°. According to a further aspect of the present invention there is provided a method of clearing a windshield having an infrared reflective (IRR) layer comprising;
detecting the presence of surface contamination using the aforementioned method; and
using a windshield clearing system, clearing the windshield in response to detecting refracted light. Clearing of the windshield may be achieved by heating the windshield in response to detecting refracted light.

Heating the windshield may include dividing the windshield into a plurality of zones and heating a zone corresponding to an area of the windshield where contamination has been detected.

According to a further aspect of the present invention there is provided a windshield monitoring system, a windshield clearing system, a vehicle, a method of detecting surface contamination on a windshield, and a method of clearing a windshield, substantially as described above.

### BRIEF DESCRIPTION OF THE DRAWINGS

One or more embodiments of the invention will now be described, by way of example only, with reference to the accompanying drawings, in which:
Figure 1A shows a windshield monitoring system according to the prior art;
Figure 1B shows a similar view to Figure 1A;
Figure 2 shows a windshield monitoring system according to a first embodiment of the present invention;
Figure 3 shows a block diagram of the windshield monitoring system of Figure 2;
Figure 4 shows a schematic of a windshield clearing system including the windshield monitoring system of Figure 2;
Figure 5 shows a section view of the windshield monitoring system of Figure 2 in operation;
Figure 6 shows a similar view to Figure 2 of a windshield monitoring system according to a second embodiment of the present invention;
Figure 7 shows a similar view to Figure 3 of a second embodiment of the present invention;
Figure 8 shows part of a windshield monitoring system according to a third embodiment of the present invention;
Figure 9 shows a block diagram of the windshield monitoring system of Figure 8;
Figure 10 shows a windshield clearing system according to another aspect of the third embodiment of the present invention;
Figure 11 shows a section view of the windshield monitoring system of Figure 8, in operation not detecting contamination;
Figure 12 shows a similar view to Figure 11 of the windshield monitoring system detecting contamination; and
Figure 13 shows a windshield clearing system of a windshield monitoring system according to a fourth embodiment of the invention.

### DETAILED DESCRIPTION

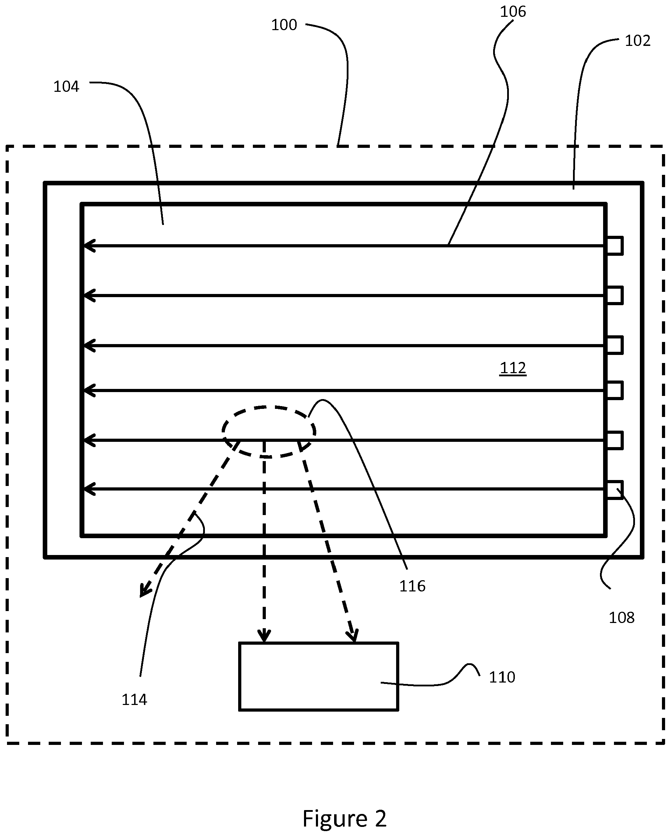

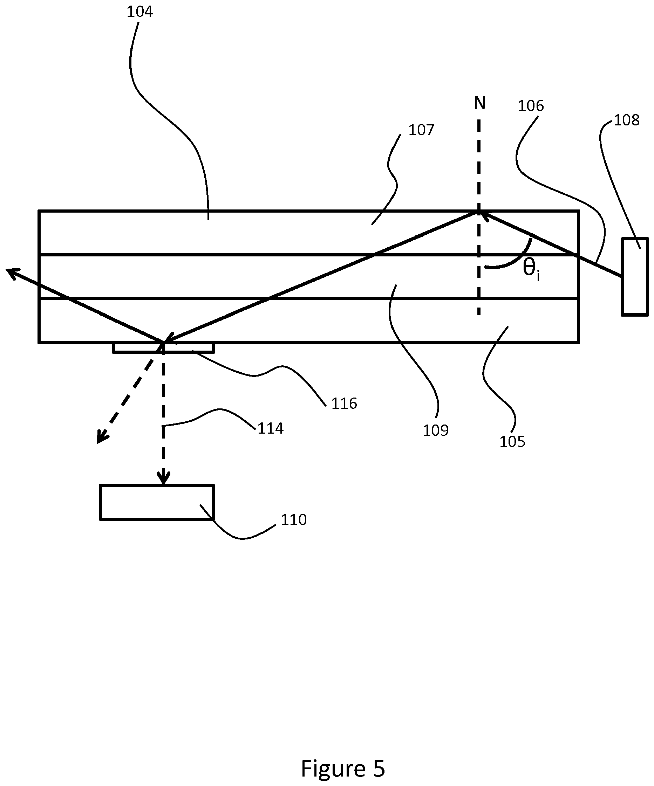

With reference to Figure 2, a vehicle 100 includes a vehicle frame 102 supporting at least one windshield 104 dividing the vehicle interior and the vehicle exterior. The term windshield covers a front windscreen, a rear windscreen, and a side window. Each windshield 104 either comprises a plurality of sheets of laminated glass or a singular sheet of glass. For instance, a laminated glass windshield 104, as shown in Figure 5, is constructed using an inner sheet of glass 105, an outer sheet of glass 107, and an intermediate layer 109 of Polyvinyl Butyral (PVB) sandwiched between the two. The intermediate layer 109 is made from PVB to prevent shards of glass flying off in a crash and because PVB has the same refractive index as the inner 105 and outer 107 sheets of glass.

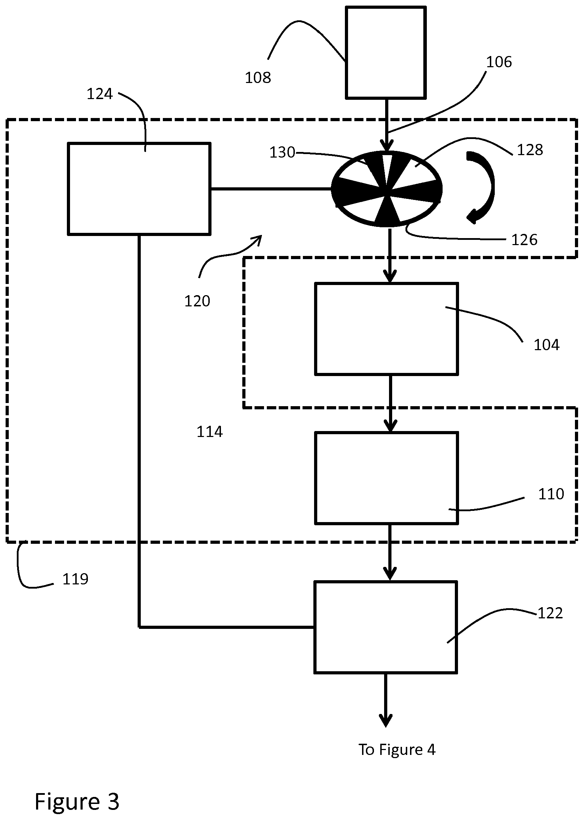

The vehicle 100 also includes a windshield monitoring system. Figure 2 shows part of the windshield monitoring system with Figure 3 showing a more detailed version in the form of a block diagram.

With continued reference to Figure 2, the windshield monitoring system includes an array of light emitters 108. The light emitters are provided in the form of Light Emitting Diodes (LEDs). The emitters 108 are separated from one another to span over a length, such that the light they emit spans the width of the 104. The emitters 108 are separated substantially equidistantly from one another. The emitters 108 are arranged to emit a narrow beam of light 106, specifically narrow beams of monochromatic light. Monochromatic light is used in contrast to white light since white light would disperse within the windshield. The array of emitters 108 is provided along one side of the windshield. In particular, the emitters 108 are encapsulated along the side of the windshield 104 within a refractive index matched medium. As will be described in more detail below, the emitters are arranged to direct the beams of light 106 into the windshield at an angle of inclination of between about 43° and about 65°.

The windshield monitoring system also includes a detector. Specifically, the detector is a camera 110. The camera 110 is a digital camera able to distinguish a position of a detected image by pixels. The camera 110 may be located in the vehicle interior. The camera 110 may be sensitive to all wavelengths of visible light, or may alternatively be sensitive only to a specific wavelength or waveband corresponding to the beams of light produced by the light emitters 108. When monitoring the front windscreen, the camera 110 is integrated into a ceiling panel of the vehicle 100 in between a rear view mirror (not shown) and the windshield 104. Alternatively, the camera may be mounted at the top of the dashboard. The camera is oriented so as to monitor an interior surface 112 of the front windscreen. As will be described in more detail below, the camera 110 can thus detect any refracted light 114 as a result of surface contamination 116. Due to the camera 110 dividing a recorded image up by pixels, the location of the refracted light 114, and thus the location of contamination 116, can be determined directly by mapping the pixel(s) detecting the reflected light onto a map of the windshield 104.

With reference to Figure 3, the example shown of the windshield monitoring system also includes a noise filter 119, which noise filter 119 includes a pulsar 120 and a lock-in amplifier 122. The function of each of these components will be described in more detail below. However in summary, the pulsar 120 includes a motor 124 and a disc 126. The disc is rotatable about an axis (not shown). The motor 124 is coupled to the disc 126 so as to rotate the disc 126 in operation. The disc 126 includes successive transparent 128 and opaque 130 regions. Light from a light beam 106 is allowed to pass though the transparent regions 128. However, light beams 106 are blocked by the opaque regions 130. The axis of rotation of the disc 126 is misaligned with the beam of light 106 such that the beam of light 106 impinges on whichever of the transparent 128 or opaque 130 regions it is aligned with.

As an alternative to pulsating the light beam using the disc 126, the light beam can be pulsated by strobing or shuttering by flickering the light beam on and off using control logic stored on a computer on board the vehicle.

The lock-in amplifier 122 communicates with the motor 124 so as to obtain the rotational speed of the disc 126. The lock-in amplifier 122 also has a data store having information regarding the geometric profiles of the transparent and opaque regions 128, 130. In this way, the lock-in amplifier can associate light detected as a result of the beam of light 106 from other light 132, for instance natural light or light from oncoming vehicle headlights.

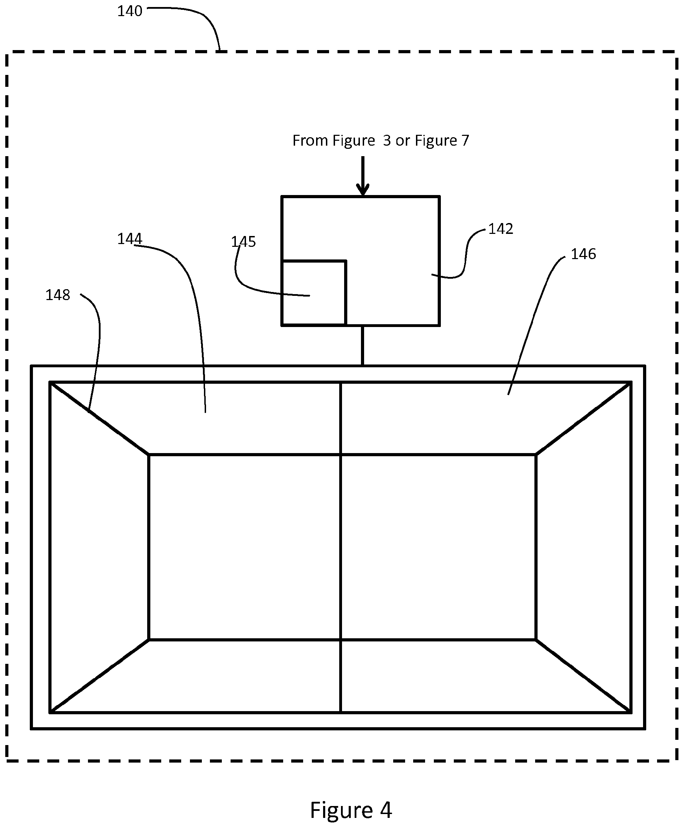

With reference to Figure 4, the vehicle 100 also includes a windshield clearing system 140. The windshield clearing system 140 includes a control module 142 and a heating mechanism 144.

The control module 142 is provided as electronic data on a non-volatile memory component of an on-board vehicle computer. The computer also includes a processor for executing the electronic data. Operation of the control module 142 is described in more detail below. However, the control module 142 receives inputs from the windshield monitoring system. Specifically, the control module 142 receives an indication as to the presence and location of any detected refracted light 114. The control module 142 then commands a heating zone 144 at a location of the detected refracted light to heat up to clear the responsible contamination.

The control module 142 includes a termination module 145 as part of the electronic data stored on the memory component of the on-board computer. The termination module 145 is arranged to send a termination command to the heating zone 144 to terminate heating in response to the camera 110 (Figure 2) ceasing to detect refracted light 114.

The heating mechanism 144 includes a plurality of active heating elements 146 and passive heating elements 148. The active heating elements 146 include resistance heating elements arranged to increase in temperature when an electrical current is passed across them. The resistance heating elements may be provided as vapour deposited metallic layers. The metallic layers can be fabricated from any metallic element or alloy suitable for conducting heat in by electrical resistance. One such metal allow is an alloy including silver. However, other electrically conductive materials may be used. For instance, an organic material, such as graphene, may be used. The passive elements 148 are boundaries of the active heating elements 146 and are provided as areas of uncoated glass to provide insulated areas intermediate the active heating elements 146. These uncoated areas are relatively narrow so as to prevent a pattern of unclear windshield. It can be visualised that the windshield is thus divided into a plurality of zones by virtue of the active and passive heating elements 146, 148.

With reference to Figure 5, in operation, light from an emitter 108 is shone as a beam of light 106 into an edge of the windshield 104. The light beam 106 is directed into the windshield 104 at an angle of incidence θᵢ relative to a normal line of incidence N of the windshield 104. The angle of incidence θᵢ is between about 43° and about 65°. It will be appreciated that the windshield in Figure 5 is of a laminated glass construction though the same angles of incidence would be applicable to a windshield made from a singular sheet of glass.

The lower limit of about 43° is chosen since this is the critical angle θ_{c} of a glass to air interface. The critical angle θ_{c} is the angle at which light reflects internally with no light escaping from the glass to the air. This phenomenon is known as total internal reflection. Any angle of incidence greater than the critical angle θ_{c} also subjects the light beam to total internal reflection. The angle of incidence, θᵢ, being greater than the critical angle of 43° is sufficient to subject the beam of light 106 to total internal reflection at a glass to air interface to propagate the beam of light 106 across the windshield 104 to an opposing edge thereof. In particular, the light beam 106 is reflected off both interior and exterior surfaces to propagate the light beam 106 across the windshield 104.

The upper limit of about 65° is the critical angle, θ_{c}, for a glass to water interface. In the same way, a beam of light 106 impinging on a glass to water interface at an angle of incidence, θᵢ, greater than 65° would reflect internally whereas an angle of incidence lower than 65° would refract light away from the windshield 104 as refracted light 114. An initial angle of incidence θᵢ is selected to be lower than the critical angle θ_{c} of glass to water in order to intentionally refract light 114 away from the windshield 104 when in contact with any water based contamination 116. In this way, the angle of incidence θᵢ is arranged to refract the light beam 106 away from the windshield 104 at a glass to water/contaminant interface.

Water based contamination benefits most from this clearing system since water is more easily cleared up by heating than other types of contamination such as dirt. Water based contamination 116 includes water vapour, liquid water, and ice.

Any refracted light 114 is detected by the camera 110. Any light detected by the camera 110 which has not been pulsated by the pulsar 120 (Figure 3) will be filtered out by the noise filter 119.

Since the camera 110 can distinguish the location of refracted light 114 on the windshield 104, the control module (Figure 4) configures the corresponding active heating element 146 covering the area of contamination 116 to heat up. Heating the area of contamination 116 will evaporate the water responsible for the contamination 116.

The termination module 145 sends a termination command to stop passing electrical current through the active heating element 146 when the camera 110 ceases to detect refracted light 114. In addition, the termination module 145 sends a termination command to stop passing electrical current through the active heating element 146 after a predetermined time period. This is particularly important in instances where false positives occur. For instance, a false positive may be triggered for windshield defects such as chips or cracks which will never be cleared by any of the vehicle's on board ancillary systems. Providing the termination command after the predetermined time period thus prevents wasted energy for non-treatable windshield contamination scenarios.

The advantages of the previous embodiment are numerous. One particular advantage is that by providing detection over a wide area of the windshield 104, less energy is ultimately consumed since any contamination 116 is detected early. This is particularly important for electric or hybrid electric vehicles where power consumption is critical to the range of the vehicle. In addition, dividing the windshield into zones of separate heating elements provides further efficiencies since uncontaminated areas are not directly heated.

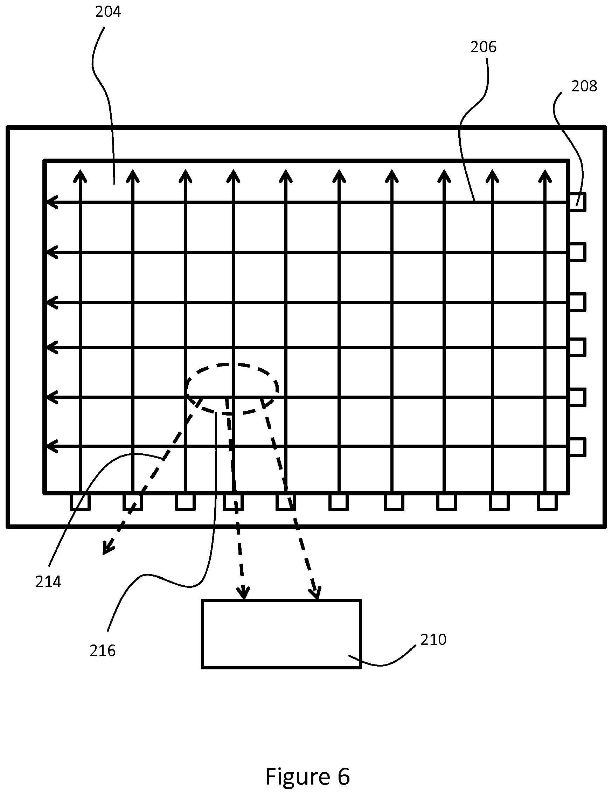

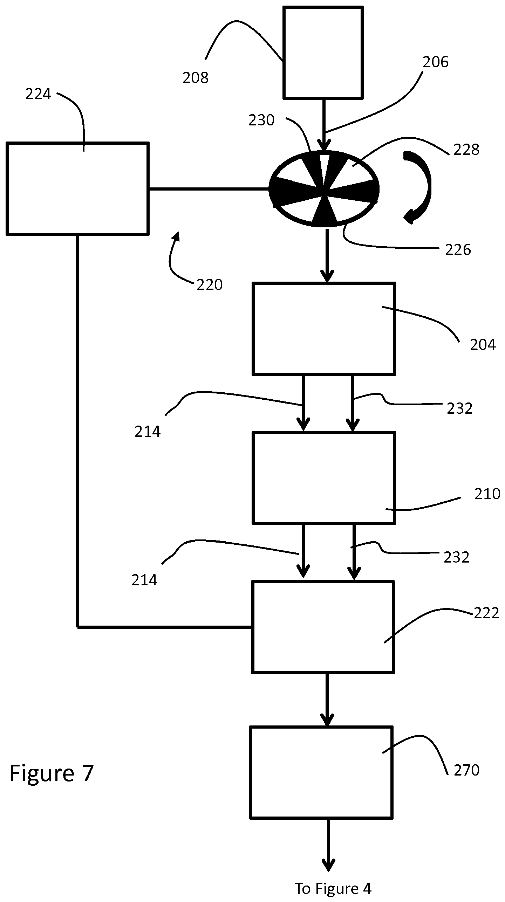

With reference to Figures 6 and 7, a second embodiment of the windshield monitoring system will now be described. Figure 6 shows part of the windshield monitoring system with Figure 7 showing a more detailed version in the form of a block diagram. It is possible to transfer those features described specifically with reference to the first embodiment to the second embodiment. Those features of the second embodiment which are common to the first embodiment are labelled 100 greater.

The windshield monitoring system includes two arrays of emitters 208. The arrays are mutually orthogonal and are provided along adjacent edges of the windshield 204. Specifically, the arrays are positioned along a bottom edge and a right side edge of the windshield 204. The emitters 208 are again separated so as to span along each edge of the windshield to provide coverage over the majority of the windshield 204. The emitters 208 are oriented to emit beams of light 206 into the windshield 204 at an angle of incidence of between about 43° and about 65°. These angles are selected for the same reasons as described above. The emitters 208 are also oriented so that the light beams 206 are substantially parallel.

The light detector in this embodiment is a photodiode 210 as opposed to a camera. The photodiode 210 can detect the presence of light, and depending on the type of photodiode used, may tuned to be sensitive only to a specific wavelength or band of wavelengths of light as may be produced by the light emitters, but cannot distinguish the location of light, like the camera 110. In order to determine the location of contamination 216, the windshield detection system associates the detected light with one light emitter 208 from each array.

With reference to Figure 7, the windshield monitoring system again includes a pulsar 220 and a lock-in amplifier 222 which work in the same way as the previous embodiment. However, each light beam 206 is pulsated at a unique predefined pattern and/or frequency of pulsation. The windshield monitoring system also includes an association module 270. The association module 270 is provided as electronic data on the memory component of the on-board computer, like the control module.

The association module 270 includes a data store for storing data relating to the pulse patterns for each emitter 208. In response to the photodiode 210 detecting a light pulse, the association module 270 compares the pulsed refracted light beam with those stored for each emitter 208. By matching the light pulse to the responsible emitter 208 in each array, the association module locates the position of the contamination 216 with a 2 dimensional coordinate. For instance, the association module may determine that contamination exists in the centre of the windshield 204 if a central emitter 208 from each array is identified as being responsible for the refracted light 214 (Figure 6). This coordinate is then fed into the control module (Figure 4) to control a heating zone corresponding to an area at which contamination 216 has been detected.

As an alternative to pulsating the light beam 206, the light beams 206 could be phase shifted relative to the other beams of light 206.

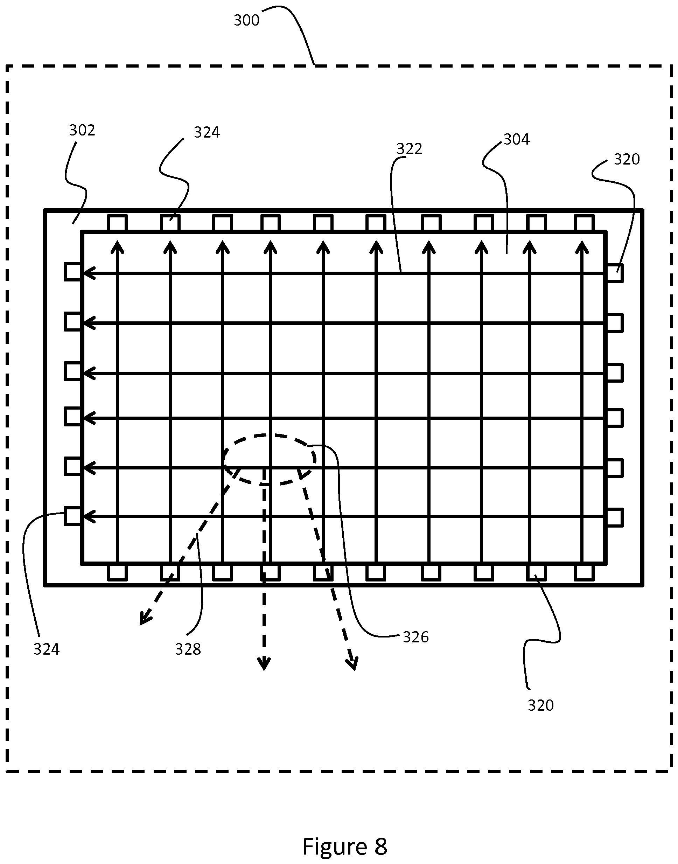

A third embodiment of the invention will now be described. With reference to Figure 8, a vehicle 300 includes a frame 302 supporting a plurality of windshields 304 (one shown). The term windshield 304 includes a front windscreen, or a rear windscreen, or a side window, of which there are several. Each windshield 304 either comprises a plurality of sheets of laminated glass or a singular sheet of glass.

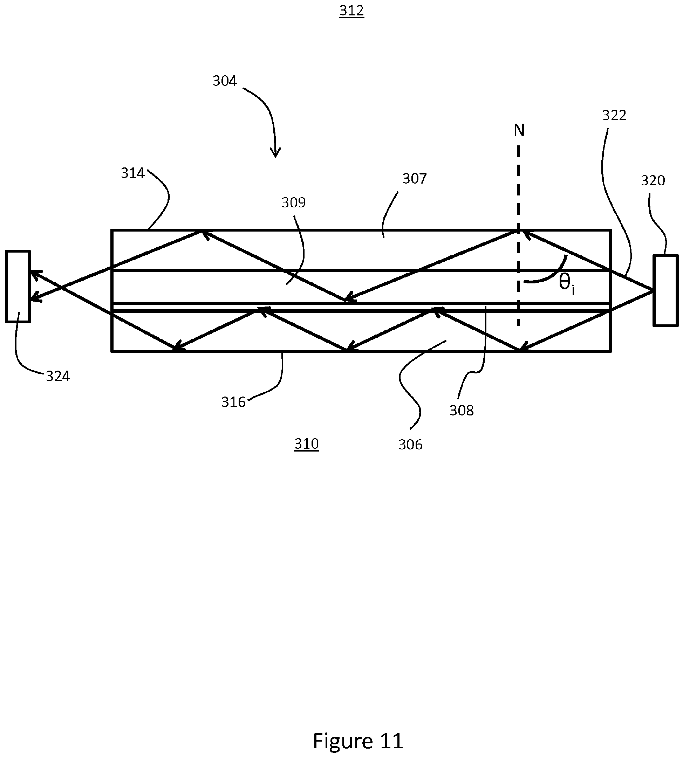

With brief reference to Figure 11, a laminated windshield 304 includes a plurality of sheets. Said sheets include outer and inner sheets of glass 306, 307, an infrared reflective (IRR) film 308, and an intermediate layer 309. The intermediate layer 309 is made from Polyvinyl Butyral (PVB). PVB is selected because it has the same refractive index as the inner 307 and outer 306 sheets of glass. The windshield 304 separates an exterior environment 310 from an interior environment 312. Accordingly, the windshield 304 has an exterior surface 316 and an interior surface 314.

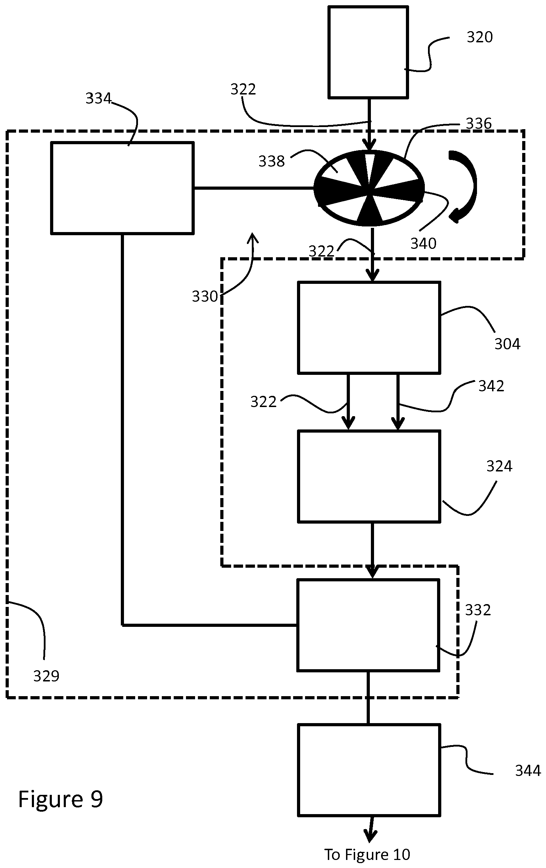

With reference to Figures 8 and 9, the vehicle 300 also includes a windshield monitoring system, part of which is shown in Figure 8 with a more detailed version in the form of a block diagram being provided in Figure 9.

With specific reference to Figure 8, the windshield monitoring system includes a light source in the form of a plurality of light emitters 320. The light emitters are Light Emitting Diodes (LEDs). The light emitters are configured to emit beams 322 of infrared light. The beams 322 are narrow beams of light. The emitters 320 are provided as two arrays of emitters. The arrays of emitters are arranged along adjacent, mutually orthogonal edges of the windshield 304. In particular, one array is provided along a right hand side edge of the windshield 304. The other array is provided along a lower horizontal edge of the windshield 304. The two arrays of light emitters 320 are thus mutually orthogonal. Each emitter 320 is arranged to direct a beam of infrared light 322 in to the windshield 304 at an angle of incidence, θᵢ, relative to a normal line of incidence N between about 42° and about 65°. The reasons for this are provided in more detail below. The light emitters 320 span along each respective edge of the windshield 304. Beams of light 322 from the same array are substantially parallel to one another. In this way, almost complete coverage of the windshield can be provided by the two mutually orthogonal arrays of light emitters 320. Each emitter 320 is encapsulated in a refractive index matched medium along the edge of the windshield.

The windshield monitoring system also includes a plurality of light detectors 324. Each light detector is a photodiode. The light detectors 324 are also provided as two mutually orthogonal arrays. The two arrays of light detectors 324 are provided along a left side edge of the windshield 304 and a top edge of the windshield 304 respectively. Each light detector 324 is associated with a unique light emitter 320 such that there are equal numbers of light detectors and emitters. The light detectors 324 have the same separation distance as the light emitters 320. As will be described in more detail below, the light detectors 324 are arranged to detect the intensity of light reflected internally within the windshield 304 from the corresponding emitter 320 at the opposing edge of the windshield 304.

As will be described in more detail below, any contamination 326 on the windshield may result in a light beam 322 being refracted away from the windshield 304. Refracted light 328 causes a drop in intensity of the internally reflected light 322 detected by the light detector 324.

With specific reference to Figure 9, the windshield monitoring system includes a noise filter 329 to distinguish light emitted from the light source from other detected light. The noise filter comprises a pulsar 330 and a lock-in amplifier 332.

The pulsar 330 includes a motor 334 and a rotatable disc 336. The motor 332 is arranged to rotate the disc about a rotation axis (not shown) at a variable speed measure in revolutions per minute (RPM). The disc includes successive transparent 338 and opaque 340 regions. A light beam 322 emitted from the light emitter 320 is directed in to the disc 336. The light beam 322 impinges on the successive transparent 338 and opaque 340 regions since the axis of rotation of the disc 336 is misaligned with the light beam 322. The light beam 322 is allowed to pass through the transparent regions 338 but is blocked by the opaque regions 340. By opaque, it is meant that any material can be used which blocks out infrared light. The transparent 338 and opaque 340 regions are not consistent in area so as to vary the duration of light passing the disc 336. In this way, the pulsar 330 is arranged to pulsate the light according to a predefined pattern corresponding the sizes of the transparent 338 and opaque 340 regions and the speed at which the motor 334 drives the disc 336.

The disc 336 and/or the speed of the motor 334 are varied across the array of light emitters 320 such that each light beam 322 is pulsated according to a unique pattern. In this way, light can be identified as originating from a specific light emitter 320. Another way in which this can be achieved is to phase shift light from each of the light emitters 320 relative to the other light emitters 320.

The lock-in amplifier 332 is connected to the motor 334 to monitor the RPM thereof. The lock-in amplifier 332 also includes a data store for storing the geometric profiles of the rotatable discs 336. The lock in amplifier can compare the received light with that calculated as being an expected pattern of light such that the light beam 322 originating from the light emitter 320 can be distinguished from other light 342 originating from a variety of other sources.

As an alternative, the pulsar may use strobing effects or shuttering to pulsate the light beam rather than using the disc 336 as described above.

The windshield monitoring system also includes a locating module 344 which is linked to the light detectors 324. Any light detected by a specific light detector 324 can be used to locate the position of the contamination as a two dimensional coordinate by identifying which detector 324 in each array has detected the refracted light.

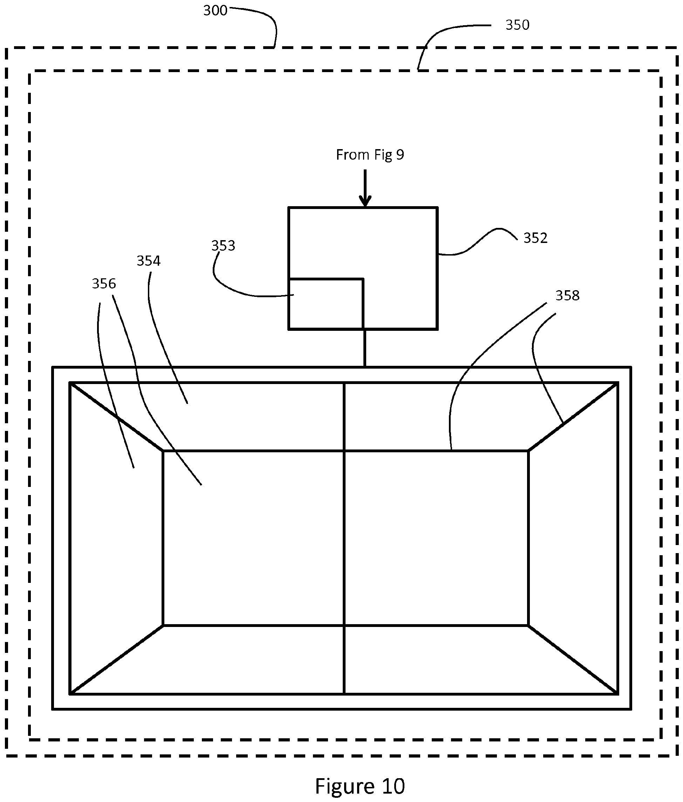

With reference to Figure 10 the vehicle 300 also includes a windshield clearing system 350. The windshield clearing system 350 includes the windshield monitoring system, a control module 352, and a clearing element, in this embodiment in the form of a heating mechanism 354.

The control module 352 is provided as electronic data on a non-volatile memory component of an on board computer system. The computer system also includes a processor to execute the electronic data to operate the control module 352. The locating module 344 is also provided in the same way, namely, electronic data stored on the non-volatile memory component of the on board computer. The control module 352 is arranged to apply a voltage across the heating mechanism 354 in response to a demand to heat the heating element to clear the contamination.

The control module 352 includes a termination module 353 as part of the electronic data stored on the memory component of the on-board computer. The termination module 353 is arranged to send a termination command to the heating mechanism 354 to terminate heating in response to the detectors 324 (Figure 9) ceasing to detect refracted light 328.

The heating mechanism 354 is divided in to a plurality of zones, or heating elements. The zones are divided in to active heating elements 356 and passive heating elements 358. Active heating elements 356 are defined as those that can be heated and are provided with electrically conductive layers. These passive zones 358 are very small in dimension so as to prevent a pattern of unclear glass during operation. These passive zones 358 are considered as boundaries to the active zones 356. The control module 352 can apply a voltage across the metallic layer of any of the active heating elements 356. The corresponding electrical current heats a zone of the windshield corresponding to the location of the detected contamination.

The heating mechanism 354 comprises a resistant heating element which is a metallic layer. The metallic layer is vapour deposited on to the windshield 304. The metallic layer is silver alloy. However, other electrically conductive materials would suffice, for instance some organic materials like graphene, or even the IRR layer itself.

With reference to Figure 11, in operation, the light emitter 320 emits a beam of infrared light 322 in to an edge of the windshield 304 such that the angle of incidence of the light on the glass to air interface is between about 43° and about 65°. These angles are measured relative to a normal angle of incidence N relative to the interior and exterior surfaces 314 and 316 of the windshield 304.

The critical angle, θ_{c}, for a glass to air interface is about 43°. The critical angle, θ_{c}, for a glass to water interface is about 65°. The difference in critical angle is due to the difference in refractive index between air and water. Any light below an angle of incidence, θᵢ, lower than a critical angle, θ_{c}, would refract away from the glass. Any angle of incidence, θᵢ, above the critical angle, θ_{c}, would reflect internally within the glass. This phenomenon is total internal reflection.

This windshield clearing system is most suitable for use in clearing water based contamination such as moisture (in the form of fogging or misting of the windshield), ice, and liquid water since water evaporates relatively easily through heat. Accordingly, an angle of incidence, θᵢ, of a beam of light 322 between about 43° and about 65° would reflect internally at a glass to air interface and refract away from the glass at a glass to contaminant interface.

The light detector 324 constantly monitors the intensity of light reflected internally across the windshield 304. Since the light beam 322 is infrared light, the light naturally reflects off the IRR layer 308 inside the laminated windshield 304. In this way, a light beam 322 can be directed on an interior side of the IRR layer 308. Additionally, or alternatively, the light beam 322 can be directed on an exterior side of the IRR layer 308. This can be achieved by directing adjacent emitters 320 to direct their beam of light 322 on opposite sides of the reflective IRR layer 308. Alternatively, a pivoting mechanism can be used to pivot an emitter 320 such that one pulse of light 322 can be directed on the interior side of the IRR layer 308 and a subsequent pulse of light 322 from the same emitter can be directed to an exterior side of the IRR layer 308.

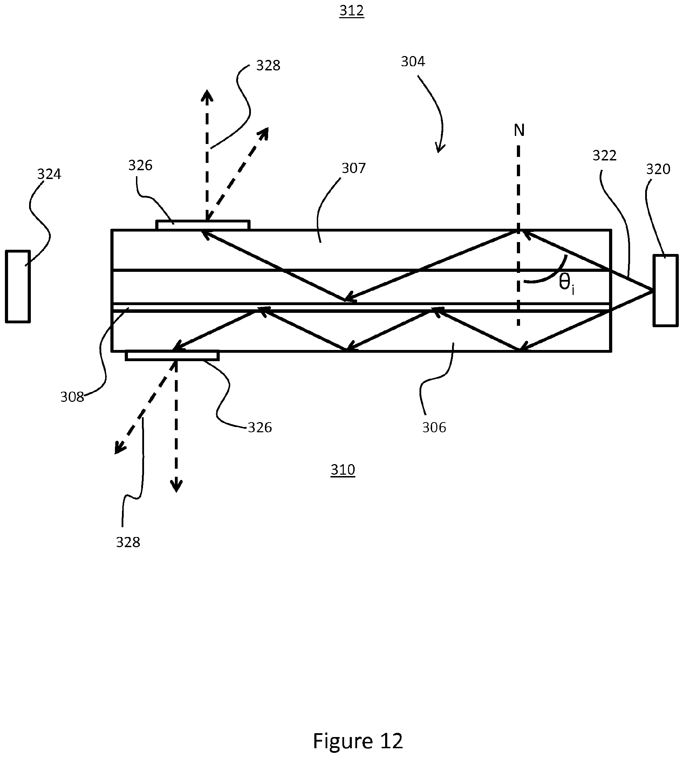

With reference to Figure 12, any contamination 326 changes the critical angle, θ_{c}, at the interface as described above. When the light beam 322 impinges on a glass to contaminant interface, light is refracted away from the windshield 304 as refracted light 328. The refracted light 328 results in a reduction in intensity of the internally reflected light beam 322. The detector 324 detects this reduction in intensity of light. A drop in intensity of light monitored by the light detector 324 is attributable to the presence of contamination 326 on the windshield 304.

The noise filter 329 filters out any light detected by the detector 324 attributable to other sources than the light source 320. The locating module 344 provides a two dimensional coordinate of the contamination 326 based on which of the detectors 324 have detected the contamination. This coordinate will distinguish between the interior and the exterior of the windshield 304 using the same approach since each emitter 320 can be configured to direct light either down and interior or exterior side of the IRR only. Using this coordinate, the control module 352 passes a voltage to one of the active heating zones 356 corresponding to the location where contamination has been detected.

When the detectors 324 experience an intensity of the received light returning to expected levels, the control module 352 determines that contamination 326 has cleared. The termination module 353 reduces the voltage across the heating element 354 to zero Volts. The temperature of the heating element 354 reduces accordingly.

There are various energy efficiencies in using this system since heating the windshield 304 has been made automatic in response to detecting any contamination 326 rather than letting the contamination 326 propagate to a point which might affect the driver's visibility. In addition, heating only an area of the windshield 304 corresponding to the location of contamination 326 is more energy efficient compared to a case where the entire windshield 304 is heated even when contamination 326 is localised.

Various other alternative embodiments are also possible within the scope of the appended claims. A fourth embodiment of the invention will now be described. Those features in common with the previous third embodiment are labelled with like reference numerals.

In this alternative embodiment, the windshield monitoring system is the same as the previously described third embodiment and so is not described in any further detail here.

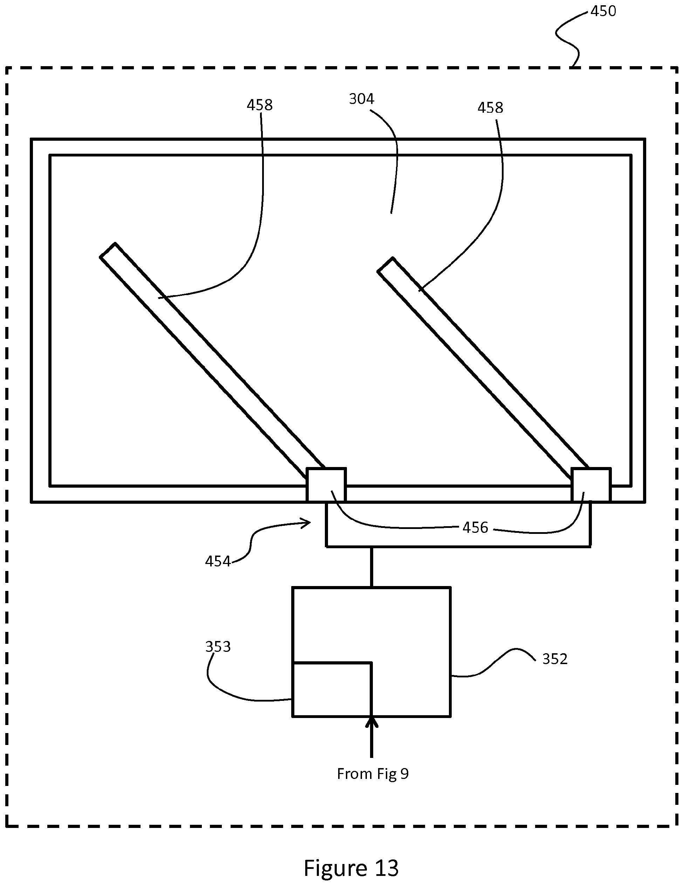

With reference to Figure 13, the windshield clearing system 450 of the alternative fourth embodiment includes the control module 352 having a termination module 353 installed therewith. The windshield clearing system also includes a windshield wiper system 454. The windshield wiper system 454 includes a motor 456 powering a wiper blade 458.

There are two wiper arms 458 shown in Figure 13, however this may be reduced depending on the windshield incorporating the windshield clearing system 450. The wiper arms 458 are of conventional design incorporating being coupled to the motor 456 in a known manner. The wiper arms 458 each support a wiper blade. The wiper blade is made from rubber and is arranged to contact the exterior surface of the windshield 304.

There are two motors 456 shown in Figure 13, each for powering a wiper arm 458. However, other configurations may be employed such as a single motor 456 driving a common linkage attached to both wiper arms 458. The motor 456 is arranged to rotate the wipers arm 458 back and forth over the exterior surface of the windshield 304 in a rotary fashion. The motor 456 can be configured to operate at several speeds.

In one mode of operation, when the windshield monitoring system (Figure 12) detects exterior surface contamination on the windshield 304, the control module 352 (Figure 13) configures the motors 456 to rotate the wiper arms 458 over the windshield. The wiper blades clear the windshield 304 by wiping away water. Once the windshield monitoring system (Figure 12) ceases to detect the presence of water on the windshield 304, the termination module 353 (Figure 13) commands the motors to terminate stop, after a cycle has been completed.

In another mode of operation, when the locating module 344 (Figure 9) has detected localised contamination, the controller 352 (Figure 13) will configure the motors 456 to move the wiper arms 458 to the area where contamination has been detected. Next, the motor 456 will move the wiper arm 458 back and forth over the contamination. Again, wiping will terminate once the windshield monitoring system ceases to detect contamination.

This alternative windshield clearing system has been described with reference to water based contamination. However, other contaminants such as dirt can be cleared in this way too by wiping away the dirt using the wiper blades. The wiper cycle can be a wash/wipe cycle if the contamination remains after an acceptable period of time. That said, some contaminants such as windshield cracks may cause false triggers. In this case, the termination module 353 overrides the control module 352 after a pre-determined time period to save energy. If a predefined number of false triggers occur then the control module 352 is arranged to emit an indication to have the windshield 304 checked. The indication can be used on the vehicle 300 or off-line during manufacture or maintenance inspection. Doing so will allow the windshield to be checked since such reoccurrences may be due to cracks in the windshield 304. If the windshield 304 is found to cracked, then the windshield 304 can be replaced.

It will be appreciated that in addition, or as an alternative to clearing the interior of the windshield 304 using electrically conductive heating elements, the windshield clearing system may be arranged to generate a control signal for communication to a vehicle based heating ventilation and air conditioning (HVAC) unit comprising an air blower. The HVAC unit is arranged to condition the air in the vehicle cabin. When contamination of the interior surface of the windshield is detected, the windshield clearing system generates a signal indicative of the location and severity of detected water based contamination on the interior surface of the windshield. In response to this signal, a fan or blower located in the vehicle HVAC unit may be activated, directing moving air across the interior surface of the windshield to accelerate clearing. Depending on detected ambient conditions, such as cabin air temperature and humidity and outside air temperature and humidity, the HVAC unit blower may be used in addition to the heating elements located on the windshield 304. In this way, the termination module 353, as described above, may also have the authority to terminate an action of the HVAC unit that had been previously requested in response to a detected water based contamination on the windshield.

## Claims

1. A windshield monitoring system, comprising:
a plurality of light emitters (108; 208; 320) forming an array, each emitter (108; 208; 320) arranged to direct a beam of light (106; 206; 322) into an edge of a vehicle windshield (104; 204; 304) at an angle of incidence arranged to subject the beam of light (106; 206; 322) to total internal reflection at a windshield to air interface to propagate the beam of light (106; 206; 322) across the windshield (104; 204; 304) to an opposing edge thereof, the angle of incidence being arranged to refract the light beam (106; 206; 322) away from the windshield (104; 204; 304) at a windshield to contaminant interface, wherein the emitters (108; 208; 320) are separated substantially across a length of the windshield (104; 204; 304); and
a light detector (110; 210; 324) arranged to detect that light from the beam of light (106; 206; 322) has been refracted away from the windshield (104; 204; 304);
the system being **characterised in that** each emitter (108; 208; 320) comprises a pulsar (120; 220; 330) to pulsate, strobe or shutter the light beam according to a predefined pattern.

2. The system of Claim 1 wherein the or each light emitter (108; 208; 320) comprises a Light Emitting Diode (LED).

3. The system of any preceding claim wherein each light beam (106; 206; 322) is pulsated, strobed or shuttered at a unique predefined pattern or is phase shifted relative to the other light pulse patterns.

4. The system of any preceding claim wherein the array substantially spans along a side edge of the windshield (104; 204; 304).

5. The system of any preceding claim wherein the light source comprises two arrays of light emitters (208; 320), the arrays being mutually orthogonal.

6. The system of any preceding claim wherein the light detector (110) comprises a camera arranged to monitor the windshield (104).

7. The system of Claim 6 wherein the camera (110) is arranged to monitor the interior face (112) of the windshield (104).

8. The system of any of Claims 1 to 5 wherein the light detector (210) comprises a photodiode.

9. The system of any preceding claim comprising an association module (270) arranged to determine a coordinate position of the contamination (216) by associating the light with one or more emitters (208) from each array.

10. The system of any preceding claim comprising a noise filter (119; 329) to distinguish light emitted from the light emitter (108; 320) from other light.

11. A windshield clearing system (350; 450) comprising;
the windshield monitoring system of any preceding claim;
a windshield clearing element (354; 454) on the windshield (104; 204; 304); and
a control module (352) arranged to control the windshield clearing element (354; 454) to heat the area corresponding to an area of the windshield (104; 204; 304) where light has been refracted.

12. A vehicle (100) comprising a system as claimed in any preceding claim.

13. A method of monitoring a windshield (104; 204; 304), comprising;
emitting a plurality of light beams (106; 206; 322) into an edge of the windshield (104; 204; 304) at an incidence angle arranged to subject the light beams (106; 206; 322) to total internal reflection at a windshield to air interface to propagate across the windshield (104; 204; 304) and the angle of incidence being arranged to refract the light beam (106; 206; 322) away from the windshield (104; 204; 304) at a windshield to contaminant interface, the plurality of light beams (106; 206; 322) being separated so as to substantially span a length of the windshield (104; 204; 304); and
detecting the presence of light refracted away from the windshield (104; 204; 304);
wherein the method is **characterised by** pulsating, strobing, or shuttering each light beam according to a pre-defined pattern.

14. A method of clearing a windshield (104; 204; 304) comprising detecting surface contamination (116; 326) using the method of Claim 13 and heating an area of the windshield (104; 204; 304) in response to detecting any contamination (116; 326).

## Patentansprüche

1. Windschutzscheiben-Überwachungssystem, Folgendes umfassend:
mehrere Lichtemitter (108; 208; 320), die eine Anordnung ausbilden, wobei jeder Emitter (108; 208; 320) angeordnet ist, um einen Lichtstrahl (106; 206; 322) in eine Kante einer Fahrzeugwindschutzscheibe (104; 204; 304) in einem Einfallswinkel zu lenken, der angeordnet ist, um den Lichtstrahl (106; 206; 322) einer inneren Totalreflexion an einer Grenzfläche zwischen Windschutzscheibe und Luft auszusetzen, um den Lichtstrahl (106; 206; 322) über die Windschutzscheibe (104; 204; 304) zu einer gegenüberliegenden Kante davon auszubreiten, wobei der Einfallswinkel angeordnet ist, um den Lichtstrahl (106; 206; 322) von der Windschutzscheibe (104; 204; 304) weg an einer Grenzfläche zwischen Windschutzscheibe und Verschmutzungsstoff zu brechen, wobei die Emitter (108; 208; 320) im Wesentlichen über eine Länge der Windschutzscheibe (104; 204; 304) getrennt sind; und
einen Lichtdetektor (110; 210; 324), der angeordnet ist, um zu erfassen, dass Licht aus dem Lichtstrahl (106; 206; 322) von der Windschutzscheibe (104; 204; 304) weg gebrochen wurde;
wobei das System **dadurch gekennzeichnet ist, dass** jeder Emitter (108; 208; 320) einen Pulsar (120; 220; 330) umfasst, um den Lichtstrahl gemäß einem vordefinierten Muster zu pulsieren, zu takten oder zu blenden.

2. System nach Anspruch 1, wobei der oder jeder Lichtemitter (108; 208; 320) eine Leuchtdiode (*light emitting diode* - LED) umfasst.

3. System nach einem der vorhergehenden Ansprüche, wobei jeder Lichtstrahl (106; 206; 322) pulsiert, getaktet oder zu einem eindeutigen vordefinierten Muster blendet oder relativ zu den anderen Lichtimpulsmustern phasenverschoben ist.

4. System nach einem der vorhergehenden Ansprüche, wobei die Anordnung sich im Wesentlichen entlang einer Seitenkante der Windschutzscheibe (104; 204; 304) erstreckt.

5. System nach einem der vorhergehenden Ansprüche, wobei die Lichtquelle zwei Anordnungen von Lichtemittern umfasst (208; 320), wobei die Anordnungen zueinander orthogonal sind.

6. System nach einem der vorhergehenden Ansprüche, wobei der Lichtdetektor (110) eine Kamera umfasst, die angeordnet ist, um die Windschutzscheibe (104) zu überwachen.

7. System nach Anspruch 6, wobei die Kamera (110) angeordnet ist, um die Innenfläche (112) der Windschutzscheibe (104) zu überwachen.

8. System nach einem der Ansprüche 1 bis 5, wobei der Lichtdetektor (210) eine Fotodiode umfasst.

9. System nach einem der vorhergehenden Ansprüche, umfassend ein Zuordnungsmodul (270), das angeordnet ist, um eine Position der Verschmutzung (216) durch Zuordnen des Lichts mit einem oder mehreren Emittern (208) aus jeder Anordnung zu koordinieren.

10. System nach einem der vorhergehenden Ansprüche, umfassend einen Rauschfilter (119; 329), um ein Licht, das aus dem Lichtemitter (108; 320) emittiert wird, von anderem Licht zu unterscheiden.

11. Windschutzscheiben-Rreinigungssystem (350; 450), Folgendes umfassend;
Windschutzscheiben-Überwachungssystem nach einem der vorhergehenden Ansprüche;
ein Windschutzscheiben-Reinigungselement (354; 454) auf der Windschutzscheibe (104; 204; 304); und
ein Steuermodul (352), das angeordnet ist, um das Windschutzscheiben-Reinigungselement (354; 454) zu steuern, um den Bereich zu erwärmen, der einem Bereich der Windschutzscheibe (104; 204; 304) entspricht, in dem Licht gebrochen wurde.

12. Fahrzeug (100), umfassend ein System nach einem der vorhergehenden Ansprüche.

13. Verfahren zum Überwachen einer Windschutzscheibe (104; 204; 304), Folgendes umfassend;
Emittieren mehrerer Lichtstrahlen (106; 206; 322) in eine Kante der Windschutzscheibe (104; 204; 304) in einem Einfallswinkel, der angeordnet ist, um die Lichtstrahlen (106; 206; 322) einer inneren Totalreflexion an einer Grenzfläche zwischen Windschutzscheibe und Luft auszusetzen, um diese über die Windschutzscheibe (104; 204; 304) auszubreiten, und wobei der Einfallswinkel angeordnet ist, um den Lichtstrahl (106; 206; 322) von der Windschutzscheibe (104; 204; 304) weg an einer Grenzfläche zwischen Windschutzscheibe und Verschmutzungsstoff zu brechen, wobei die mehreren Lichtstrahlen (106; 206; 322) getrennt sind, um sich im Wesentlichen über eine Länge der Windschutzscheibe (104; 204; 304) zu erstrecken; und
Erfassen des Vorhandenseins von Licht, das von der Windschutzscheibe (104; 204; 304) weg gebrochen wurde;
wobei das Verfahren **dadurch gekennzeichnet ist, dass** jeder Lichtstrahl gemäß einem vordefinierten Muster pulsiert, getaktet oder geblendet wird.

14. Verfahren zum Reinigen einer Windschutzscheibe (104; 204; 304), umfassend das Erfassen einer Oberflächenverunreinigung (116; 326) unter Verwendung des Verfahrens nach Anspruch 13 und das Erwärmen eines Bereichs der Windschutzscheibe (104; 204; 304) als Reaktion auf das Erfassen einer beliebigen Kontamination (116; 326).

## Revendications

1. Un système de surveillance de pare-brise, comprenant:
une pluralité d'émetteurs de lumière (108; 208; 320) formant un réseau, chaque émetteur (108; 208; 320) étant agencé pour diriger un faisceau de lumière (106; 206; 322) dans un bord d'un pare-brise de véhicule (104; 204 ; 304) à un angle d'incidence agencé pour soumettre le faisceau de lumière (106; 206; 322) à une réflexion interne totale au niveau d'une interface pare-brise - air pour propager le faisceau de lumière (106; 206; 322) à travers le pare-brise (104; 204; 304) vers un bord opposé de celui-ci, l'angle d'incidence étant agencé pour réfracter le faisceau lumineux (106; 206; 322) loin du pare-brise (104; 204; 304) à une interface pare-brise - contaminant, dans lequel les émetteurs (108; 208; 320) sont séparés sensiblement à travers une longueur du pare-brise (104; 204; 304); et
un détecteur de lumière (110; 210; 324) agencé pour détecter que la lumière du faisceau de lumière (106; 206; 322) a été réfractée loin du pare-brise (104; 204; 304);
le système étant **caractérisé en ce que** chaque émetteur (108; 208; 320) comprend un pulsar (120; 220; 330) pour puiser, strobbler ou obturer le faisceau lumineux selon un motif prédéfini.

2. Système selon la revendication 1, dans lequel le ou chaque émetteur de lumière (108; 208; 320) comprend une diode électroluminescente (DEL).

3. Système selon l'une quelconque des revendications précédentes, dans lequel chaque faisceau lumineux (106; 206; 322) est pulsé, stroboscopique ou obturé selon un motif prédéfini unique ou est déphasé par rapport aux autres motifs d'impulsion lumineuse.

4. Système de toute revendication précédente dans lequel le réseau s'étend sensiblement le long d'un bord latéral du pare-brise (104; 204; 304).

5. Système selon l'une quelconque des revendications précédentes, dans lequel la source de lumière comprend deux réseaux d'émetteurs de lumière (208; 320), les réseaux étant mutuellement orthogonaux.

6. Système selon l'une quelconque des revendications précédentes, dans lequel le détecteur de lumière (110) comprend une caméra agencée pour surveiller le pare-brise (104).

7. Système selon la revendication 6, dans lequel la caméra (110) est agencée pour surveiller la face intérieure (112) du pare-brise (104).

8. Système selon l'une quelconque des revendications 1 à 5, dans lequel le détecteur de lumière (210) comprend une photodiode.

9. Le système de toute revendication précédente comprenant un module d'association (270) agencé pour déterminer une position de coordonnées de la contamination (216) en associant la lumière à un ou plusieurs émetteurs (208) de chaque réseau.

10. Le système de toute revendication précédente comprenant un filtre de bruit (119; 329) pour distinguer la lumière émise par l'émetteur de lumière (108; 320) d'une autre lumière.

11. Système de nettoyage de pare-brise (350; 450) comprenant ;
le système de surveillance du pare-brise de toute réclamation précédente ;
un élément de dégagement du pare-brise (354; 454) sur le pare-brise (104; 204; 304) ; et
un module de commande (352) agencé pour commander l'élément de dégagement du pare-brise (354; 454) pour chauffer la zone correspondant à une zone du pare-brise (104; 204; 304) où la lumière a été réfractée.

12. Véhicule (100) comprenant un système tel que revendiqué dans toute revendication précédente.

13. Procédé de surveillance d'un pare-brise (104; 204; 304), comprenant;
émettre une pluralité de faisceaux lumineux (106; 206; 322) dans un bord du pare-brise (104; 204; 304) à un angle d'incidence agencé pour soumettre les faisceaux lumineux (106; 206; 322) à une réflexion interne totale à une interface pare-brise - air pour qu'ils se propagent à travers le pare-brise (104; 204; 304) et l'angle d'incidence étant agencé pour réfracter le faisceau lumineux (106; 206; 322) en l'éloignant du pare-brise (104; 204; 304) au niveau d'une interface pare-brise - contaminant, la pluralité de faisceaux lumineux (106; 206; 322) étant séparés de manière à couvrir sensiblement une longueur du pare-brise (104; 204; 304); et
détecter la présence de lumière réfractée loin du pare-brise (104; 204; 304);
dans lequel le procédé est **caractérisé par** la pulsation, le stroboscope ou l'obturation de chaque faisceau lumineux selon un motif prédéfini.

14. Procédé de nettoyage d'un pare-brise (104; 204; 304) comprenant la détection d'une contaminationde surface (116; 326) en utilisant le procédé de la revendication 13 et le chauffage d'une zone du pare-brise (104; 204; 304) en réponse à la détection de toute contamination (116; 326).
